# EUROPEAN PATENT SPECIFICATION

(11) **EP 3 104 038 B1**
(45) Date of publication and mention of the grant of the patent: **18.07.2018**
(21) Application number: 15745788.8
(22) Date of filing: 04.02.2015
(51) Int. Cl.: F16D 13/64, F16F 15/129

(54) **HYSTERESIS MECHANISM FOR VEHICLE DAMPER DEVICE**
HYSTERESEMECHANISMUS FÜR FAHRZEUGDÄMPFERVORRICHTUNG
MÉCANISME À HYSTÉRÉSIS POUR DISPOSITIF D'AMORTISSEUR DE VÉHICULE

(30) Priority: 07.02.2014 JP 2014022113
(43) Date of publication of application: 14.12.2016
(73) Proprietor: TOYOTA JIDOSHA KABUSHIKI KAISHA, Toyota-shi, Aichi-ken 471-8571 (JP)
(72) Inventor: WATARAI, Shinichiro, Toyota-shi Aichi 471-8571 (JP)
(74) Representative: Intès, Didier Gérard André
(86) International application number: PCT/JP2015/053157
(87) International publication number: WO 2015/119172

(56) References cited:
- FR-A5- 2 183 388
- JP-U- H0 545 259
- JP-U- H03 107 524
- US-A- 5 580 312

## Description

### TECHNICAL FIELD

The present invention relates to a hysteresis mechanism provided in a vehicular damper device, and more particularly to a structure of the hysteresis mechanism which permits a change of a hysteresis torque value depending upon a direction of transmission of a torque through the damper device.

### BACKGROUND ART

In a power transmitting system disposed between an engine and drive wheels of a vehicle, there is provided a damper device for absorbing an input torque variation. There is known the damper device of a type provided with a hysteresis mechanism configured to generate a hysteresis torque due to friction during relative rotation between disc plates and a hub of the damper device, for thereby damping the torque variation.

Patent Document 1 discloses an example of a damper device (damper disc device) wherein a conical spring 9 is disposed between a clutch plate 4 and a first friction plate 10, and the first friction plate 10 extends through the clutch plate 4, for preventing a rotary motion of the conical spring 9 relative to the clutch plate 4 and the first friction plate 10. During a rotary motion of an input rotary member of the damper device in a positive direction, four friction washers 11, 12, 14 and 16 generate a comparatively large hysteresis torque H1 due to their sliding friction. During a rotary motion of the input rotary member in a negative direction, on the other hand, the two friction washers 11 and 16, that is, the first friction washer 11 and the fourth friction washer 16 generate a comparatively small hysteresis torque H2 due to their sliding friction, relative to the rotary motion in the positive direction. Thus, the damper device is structured such that the hysteresis torque to be generated changes depending upon whether the damper device is operated in the positive or negative direction.

### PRIOR ART DOCUMENTS

### Patent Documents

Patent Document 1: JP-5-45259 U
Patent Document 2: JP-2010-230098 A1
Patent Document 3: JP-2007-218347 A1
Patent Document 4: JP-7-259879 A1
Patent Document 5: US 5 580 312 A

### SUMMARY OF THE INVENTION

### Object Achieved By The Invention

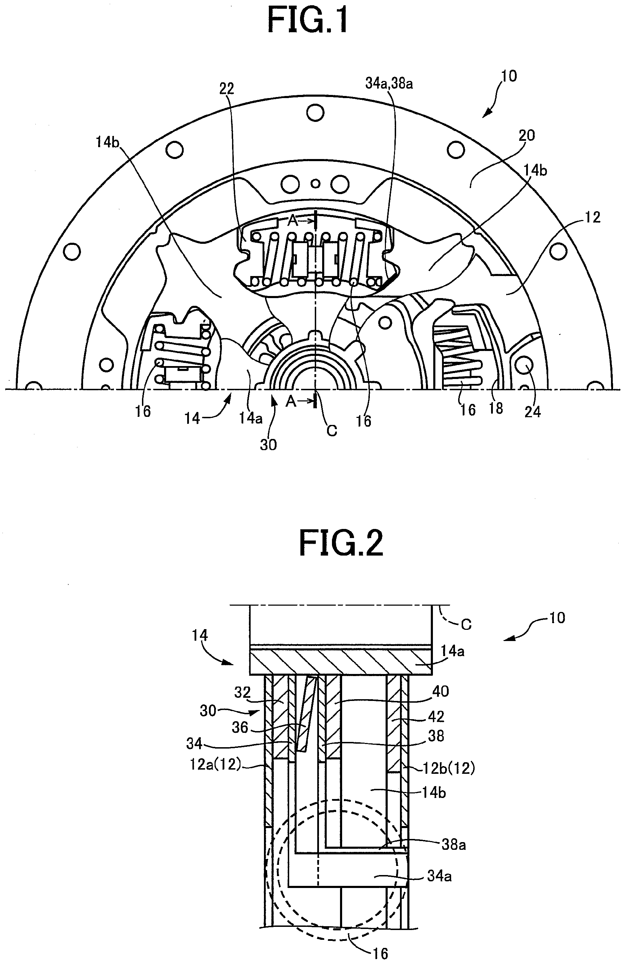

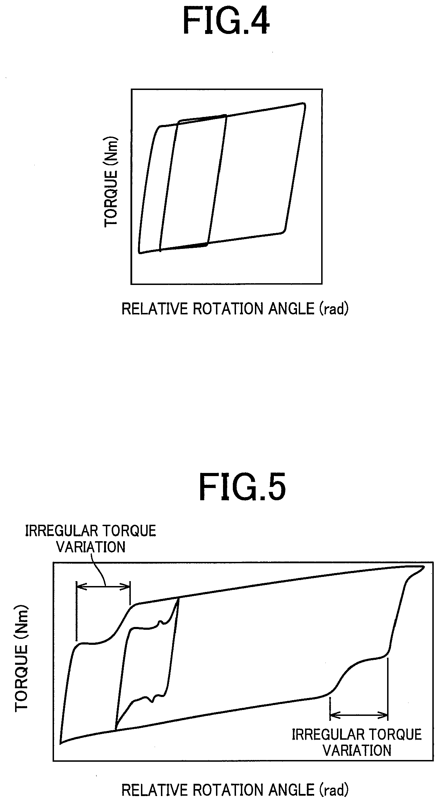

By the way, the damper device (damper disc device) disclosed in Patent Document 1 is configured such that a portion of the first friction plate 10 extends through the clutch plate 4, to prevent a rotary motion of the first friction plate 10, as shown in Fig. 2 of the document, and such that a gap is left between the above-indicated extending portion of the first friction plate 10 and the clutch plate 4 so that the first friction plate 10 is axially movable. This gap gives rise to a risk of failure to generate a desired value of hysteresis torque during a relative rotary motion between the clutch plate 4 and flange portions 2. Fig. 5 shows an operational characteristic of the damper device of a prior art structure. In Fig. 5, a relative rotation angle of the damper device is taken along the horizontal axis, while a torque is taken along the vertical axis. As shown in Fig. 5, the gap causes recessed portions (irregular torque variations). In view of the irregular torque variations, the hysteresis mechanism of the prior art structure is required to generate the hysteresis torque of an unnecessarily large value.

The present invention was made in view of the background art described above, Patent Document 5 being considered the closest prior art. It is therefore an object of this invention to provide a hysteresis mechanism of a vehicular damper device of the type which permits generation of different values of a hysteresis torque during operations of the damper device in respective positive and negative directions, which hysteresis mechanism is structured to permit generation of the hysteresis torque of the desired values.

### Solution to Problem

The object described above is achieved according to a first aspect of the invention, which provides a hysteresis mechanism for (a) a vehicular damper device including a pair of disc plates functioning as an input rotary member, a hub functioning as an output rotary member, and elastic members interposed between the disc plates and the hub, the hysteresis mechanism being characterized by comprising: (b) first and second control plates disposed between one of the above-described disc plates and the above-described hub in an axial direction of the damper device; (c) a first friction member disposed between the above-described control plates device and the above-described hub in the axial direction; (d) a second friction member disposed between the above-described hub and the other of the above-described disc plates in the axial direction; and (e) a spring interposed in a preloaded state between the above-described first control plate and the above-described second control plate in the axial direction, and wherein (f) a hysteresis torque generated by a sliding action of the second friction member during a relative rotary motion between the above-described hub and the above-described other of the above-described disc plates is smaller than a hysteresis torque generated by a sliding action of the above-described first friction member during a relative rotary motion between the above-described control plates and the above-described hub; and (g) each of the above-described first control plate and the above-described second control plate having a portion which is gripped between one end of the above-described elastic members and the above-described hub, and between the one end of the above-described elastic members and the above-described disc plates in a circumferential direction.

In the vehicular damper device constructed as described above, the relative rotary motion between the above-described control plates and the above-described hub causes generation of the comparatively large hysteresis torque by the first friction member interposed between the control plates and the hub, while the relative rotary motion between the other of the disc plates and the hub causes generation of the comparatively small hysteresis torque by the second friction member interposed between the other of the disc plates and the hub. On the other hand, a rotary motion of the disc plates relative to the above-described control plates and the above-described hub while the control plates and the hub are rotated together causes generation of the comparatively small hysteresis torque by the second friction member interposed between the hub and the other of the disc plates. Thus, the value of the hysteresis torque generated in the vehicular damper device can be changed depending upon the direction of transmission of the input torque through the damper device (depending upon whether the damper device is operated in the positive direction or negative direction). It is noted that the spring which is interposed between the first control plate and the second control plate is not held in contact with the friction members. Accordingly, unlike the prior art structure, the present structure is not required to dispose the friction members so as to extend through the disc plates, for thereby preventing the rotary motions of the friction members relative to the disc plates, so that the gap is not required to prevent the relative rotary motions, whereby the desired hysteresis torque can be generated.

According to a second aspect of the invention, the hysteresis mechanism for the vehicular damper device according to the first aspect of the invention is configured such that the above-described first control plate and the above-described second control plate are rotated relative to the above-described hub when the damper device is operated in a positive direction, and are rotated together with the above-described hub when the damper device is operated in a negative direction. According to this second aspect of the invention, the control plates and the hub are rotated relative to each other while each of the control plates a portion of which is gripped between the other of the disc plates and the elastic members is rotated together with the disc plates during the operation of the vehicular damper device in the positive direction, so that the first friction member interposed between the control plates and the hub generates the comparatively large hysteresis torque, while the second friction member interposed between the hub and the other of the disc plates generates the comparatively small hysteresis torque. When the vehicular damper device is operated in the negative direction, on the other hand, the hub and the other of the disc plates are rotated relative to each other while the control plate the portion of which is gripped between the hub and the elastic members is rotated together with the hub, so that the second friction member interposed between the hub and the other of the disc plates generates the comparatively small hysteresis torque. Thus, the value of the hysteresis torque generated in the vehicular damper device can be changed depending upon the direction of transmission of the input torque through the damper device (depending upon whether the damper device is operated in the positive direction or negative direction).

According to a third aspect of the invention, the hysteresis mechanism for the vehicular damper device according to the first or second aspect of the invention is configured such that the above-described first control plate is axially interposed between the above-described second control plate and the above-indicated one of the above-described disc plates, and a third friction member is axially interposed between the above-indicated one of the disc plates and the above-described first control plate. According to this third aspect of the invention, a relative rotary motion between the above-indicated one of the disc plates and the first control plate does not take place during the operation of the vehicular damper device in the positive direction, so that the third friction member does not generate a hysteresis torque. During the operation of the vehicular damper device in the negative direction, however, a relative rotary motion takes place between the above-indicated one of the disc plates and the first control plate, so that the third friction member interposed therebetween generates the comparatively small hysteresis torque.

Fig. 1 is a front elevational view of a vehicular damper device according to a preferred embodiment of this invention;
Fig. 2 is a schematic cross sectional view of the vehicular damper device of Fig. 1 taken along line A-A;
Figs. 3A to 3C are schematic views for explaining an operation of the vehicular damper device of Fig. 1;
Fig. 4 is a view showing an operational characteristic of the vehicular damper device of Fig. 1; and
Fig. 5 is a view showing an operational characteristic of a vehicular damper device of a prior art structure.

### MODE FOR CARRYING OUT THE INVENTION

An embodiment of the invention will be described in detail by reference to the drawings. It is to be understood that the drawings are simplified or transformed as needed, and do not necessarily accurately represent the dimensions and shapes of individual portions of the embodiment.

### EMBODIMENT

Fig. 1 is the front elevational view of a vehicular damper device 10 (hereinafter referred to as a "damper device 10") according to a preferred embodiment of this invention. It is to be understood that the lower half of the damper device 10 with respect to its axis C is not shown in Fig. 1, and that the view of Fig. 1 is a partly cut away to show an interior structure of disc plates 12 which will be described.

The damper device 10 includes: the pair of disc plates 12 functioning as an input rotary member and operatively connected to an engine not shown; a hub 14 functioning as an output rotary member and operatively connected to drive wheels; torsion springs 16 functioning as elastic members and operatively interposed between the disc plates 12 and the hub 14; and a hysteresis mechanism 30 described below, which is disposed between the disc plates 12 and the hub 14 and configured to generate a hysteresis torque for thereby damping an input torque variation.

The pair of disc plates 12 consist of a pair of right and left discs, which are disposed such that the hub 14 and the torsion springs 16 are put therebetween, and which are rotatable about an axis C. The disc plates 12 have four spring receptacles 18 formed to accommodate the torsion spring 16 such that the spring receptacles 18 are spaced apart from each other in a circumferential direction of the disc plates 12. Each of the disc plates 12 carries a clutch disc 20 fixed to its outer circumferential surface.

The hub 14 includes a cylindrical portion 14a having a toothed inner circumferential surface for spline-connection to a drive shaft not shown, and flange portions 14b extending radially outwardly from an outer circumferential surface of the cylindrical portion 14a. In the present embodiment, four flange portions 14b are formed so as to be equiangularly spaced apart from each other in the circumferential direction. The adjacent ones of the flange portions 14b define a space for accommodating each torsion spring 16.

The torsion springs 16 are disposed between the disc plates 12 and the hub 14 through spring seats 22, such that the disc plates 12 and the hub 14 are operatively connected to each other through the torsion springs 16. When a torque is transmitted from the disc plates 12 to the hub 14, for example, each torsion spring 16 is pressed at one of its opposite ends by the disc plates 12 while the torsion spring 16 presses the corresponding flange portion 14b of the hub 14 at the other end. At this time, the torsion spring 16 is elastically deformed so as to transmit the input torque while absorbing a variation of the input torque.

The hysteresis mechanism 30 is disposed between the disc plates 12 and the hub 14, radially inwardly of the torsion springs 16, so as to generate different values of the hysteresis torque during operations of the damper device 10 in respective positive and negative directions. The structure and operations of the hysteresis mechanism 30 will be described.

Fig. 2 is the schematic cross sectional view of the damper device 10 taken along line A-A of Fig. 1. It is noted that Fig. 2 shows the torsion spring 16 by broken lines, and does not show the spring seat 22 and a cushioning member disposed within the torsion spring 16.

As also shown in Fig. 2, the pair of disc plates 12a and 12b are disposed radially outwardly of the hub 14, so as to hold the torsion springs 16 therebetween. In this respect, it is noted that the pair of disc plates 12a and 12b are fixed to each other through rivets 24 (shown in Fig. 1), and are rotated together. Between the disc plates 12a, 12b and the hub 14, the hysteresis mechanism 30 is disposed in parallel with the torsion springs 16.

The hysteresis mechanism 30 includes: a low-friction plate 32, a first control plate 34, a conical spring 36, a second control plate 38 and a high-friction plate 40, which are axially interposed between the disc plate 12a and the flange portions 14b of the hub 14; and a low-friction plate 42 axially interposed between the flange portions 14b and the disc plate 12b. In the present embodiment, the disc plate 12a is one of the disc plates 12 while the disc plate 12b is the other of the disc plates 12, and the low-friction plate 32, the conical spring 36, the high-friction plate 40 and the low-friction plate 42 respectively function as a third friction member, a spring, a first friction member and a second friction member.

The low-friction plate 32 consists of a disc which is axially interposed between the disc plate 12a and the first control plate 34. During a relative rotary motion between the disc plate 12a and the first control plate 34, frictional forces are generated between mutually abutting surfaces (sliding surfaces) of the disc plate 12a and the low-friction plate 32 and between mutually abutting surfaces (sliding surfaces) of the low-friction plate 32 and the first control plate 34, whereby a comparatively small hysteresis torque H1 is generated.

The first control plate 34 consists of a disc having abutting portions 34a each in the form of a plate formed in its radially outer portion such that each abutting portion 34a is gripped between one end of the corresponding torsion spring 16 and the disc plate 12b, and between the one end of the corresponding torsion spring 16 and the corresponding flange portion 14b of the hub 14 in the circumferential direction of the first control plate 34. The abutting portion 34a extends in the axial direction of the disc toward the disc plate 12b so as to be gripped between the torsion spring 16 and the disc plate 12b, and between the one end of the corresponding torsion spring 16 and the corresponding flange portion 14b of the hub 14, such that the abutting portion 34a overlaps the hub 14 and the disc plate 12b in the axial direction and such that the abutting portion 34a has abutting surfaces formed perpendicularly to the rotating direction of the first control plate 34. Each of the abutting portions 34a is held in abutting contact with only one end of the corresponding torsion spring 16, and the abutting portions 34a are provided for the respective torsion springs 16, or for the respective selected ones of the torsion springs 16 the number of which is about a half of the total number of the torsion springs 16, such that the abutting portions 34a are equiangularly spaced apart from each other in the circumferential direction. In the present embodiment, two abutting portions 34a are provided for the four torsion springs 16. It is noted that the abutting portions 34a correspond to a portion of the first control plate 34.

The conical spring 36 consists of a coned disc axially interposed between the first control plate 34 and the second control plate 38 such that the conical spring 36 is preloaded therebetween, so that the mutually abutting plates (32 and 34; 38 and 40) are held in pressing contact with each other in the axial direction under a biasing force of the conical spring 36.

The second control plate 38 consists of a disc having abutting portions 38a each in the form of a plate formed in its radially outer portion such that each abutting portion 38a is between one end of the corresponding torsion spring 16 and the disc plate 12b, and between the one end of the corresponding torsion spring 16 and the corresponding flange portion 14b of the hub 14 in the circumferential direction of the second control plate 34. Like the abutting portion 34a, the abutting portion 38a extends in the axial direction of the disc toward the disc plate 12b so as to be gripped between the torsion spring 16 and the disc plate 12b, and between the torsion spring 16 and the corresponding flange portion 14b of the hub 14, such that the abutting portion38a overlaps the hub 14 and the disc plate 12b in the axial direction and such that the abutting portion 38a has abutting surfaces formed perpendicularly to the rotating direction of the first control plate 34. Each of the abutting portions 38a is held in abutting contact with only one end of the corresponding torsion spring 16, which is the same one end of the corresponding torsion spring with which each of the abutting portions 34a is held in abutting contact, and the abutting portions 38a are provided for the respective torsion springs 16, or for the respective selected ones of the torsion springs 16 the number of which is about a half of the total number of the torsion springs 16, such that the abutting portions 38a are equiangularly spaced apart from each other in the circumferential direction. In the present embodiment, two abutting portions 38a are provided for the four torsion springs 16. Fig. 2 illustrates that each of the abutting portions 38a is gripped between the abutting portion 34a and the hub 14, and between the abutting portion 34a and the disc plate 12b in the circumferential direction. That is, the abutting portion 34a and the abutting portion 38a are superposed on each other between the torsion spring 16 and the disc plate 12b, and between the torsion spring 16 and the hub 14. It is noted that the abutting portions 38a correspond to a portion of the second control plate 38.

The high-friction plate 40 consists of a disc which is axially interposed between the second control plate 38 and the flange portions 14b of the hub 14. During a relative rotary motion between the second control plate 38 and the hub 14, a frictional force is generated between mutually abutting surfaces (sliding surfaces) of the second control plate 38 and the high-friction plate 40, whereby a comparatively large hysteresis torque H2 larger than the comparatively small hysteresis torque H1 is generated.

The low-friction plate 42 consists of a disc which is axially interposed between the flange portions 14b of the hub 14 and the disc plate 12b. During a relative rotary motion between the hub 14 and the disc plate 12b, a frictional force is generated between mutually abutting surfaces (sliding surfaces) of the low-friction plate 42 and the disc plate 12b, whereby the comparatively small hysteresis torque H1 is generated.

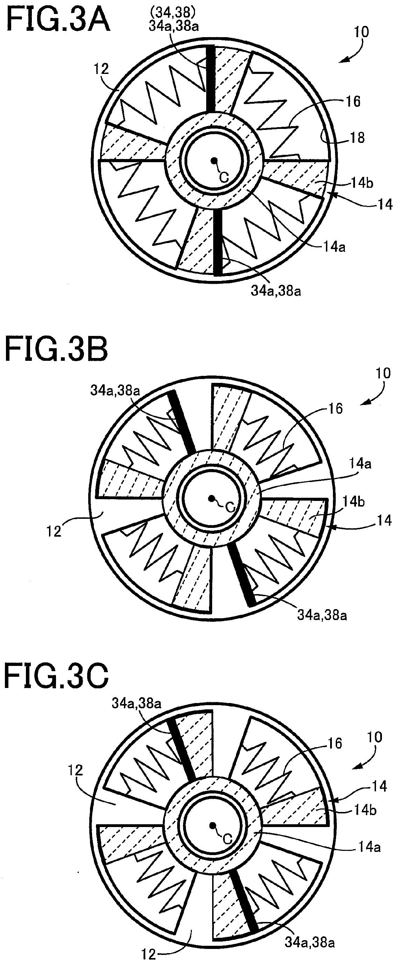

The operation of the hysteresis mechanism 30 structured as described above will be described. Figs. 3A to 3C are the schematic views for explaining the operation of the damper device 10. It is noted that the damper device 10 is rotated about the axis C in the counterclockwise direction. In Figs. 3A to 3C, thick solid lines indicate the disc plates 12 wherein the four spring receptacles 18 are formed so as to be spaced apart from each other in the circumferential direction of the disc plates 12. Broken hatching lines indicate the hub 14 having the four flange portions 14b which are equiangularly spaced apart from each other in the circumferential direction. The four torsion springs 16 which are indicated by saw-toothed lines are accommodated in the respective spring receptacles 18. Solid black areas indicate the abutting portion 34a of the first control plate 34 and the abutting portion 38a of the second control plate 38, which are superposed on each other in the circumferential direction between the torsion springs 16 and the flange portions 14b of the hub 14, and between the torsion springs 16 and the disc plates 12. Each of the abutting portions 34a, 38a is formed at two circumferentially spaced-apart positions, that is, for every two torsion springs out of the four torsion springs 16. Each of the two abutting portions 34a, 38a is disposed in abutting contact with one end of the corresponding torsion spring 16 at which the torsion spring 16 receives (i.e. is subjected to) a torque which is input (transmitted) to the damper device 10 through the disc plates 12.

Fig. 3A indicates an operating state of the damper device 10 in which an input torque is not transmitted to the damper device 10, that is, a relatively rotated state between the disc plates 12 and the hub 14 does not take place in the damper device 10, and Fig. 3B indicates an operating state in which the damper device 10 is operated in the positive direction, while Fig. 3C indicates an operating state in which the damper device 10 is operated in the negative direction. In the operating state in which the input torque is not transmitted to the damper device 10, the torsion springs 16 are not compressed, as shown in Fig. 3A, so that no relatively rotated state between the disc plates 12 and the flange portions 14b of the hub 14 takes place.

When the damper device 10 is operated in the positive direction, the input torque is transmitted to the damper device 10 through the disc plates 12, so that the disc plates 12 are rotated in the counterclockwise direction relative to the hub 14, as shown in Fig. 3B. As a result, the disc plates 12 force the first control plate 34 and the second control plate 38 (hereinafter referred to as "control plates 34 and 38", unless otherwise specified), so as to rotate the control plates 34 and 38 (in the counterclockwise direction), such that the control plates 34 and 38 are rotated together with the disc plates 12. In the damper device 10 as shown in Fig. 2, the disc plates 12 are rotated about the axis C relative to the hub 14 in the direction toward the viewer of the figure, so that the control plates 34 and 38 held in abutting contact with the disc plate 12b are also rotated together with the disc plate 12 about the axis C relative to the hub 14 in the direction toward the viewer of the figure. This relative rotary motion between the hub 14 and the control plates 34, 38 causes each of the second control plate 38 and the flange portions 14b of the hub 14 to slide on the respective sliding surfaces (abutting surfaces) of the high-friction plate 40 interposed between the second control plate 38 and the flange portions 14b of the hub 14, whereby the high-friction plate 40 transmits the comparatively large hysteresis torque H2 to the hub 14. Further, the relative rotary motion between the disc plate 12b and the hub 14 causes the disc plate 12b to slide on the sliding surface (abutting surface) of the low-friction plate 42 interposed between the disc plate 12b and the flange portions 14b, whereby the low-friction plate 42 transmits the comparatively small hysteresis torque H1 to the hub 14. On the other hand, the disc plate 12a and the first control plate 34 are rotated together, without a relative rotary motion therebetween, so that the low-friction plate 32 interposed therebetwen does not transmit the small hysteresis torque H1 to the hub 14. Thus, the large hysteresis torque H2 and the small hysteresis torque H1 are generated during the operation of the damper device 10 in the positive direction.

There will next be described the operation of the damper device 10 in the negative direction, in which the input torque is transmitted to the damper device 10 through the hub 14. In the operation of the damper device 10 in the negative direction, the input torque is transmitted to the damper device 10 through the hub 14, so that the hub 14 is rotated in the counterclockwise direction relative to the disc plates 12, as shown in Fig. 3C. As a result, the hub 14 forces the control plates 34 and 38, so as to rotate the control plates 34 and 38 together with the hub 14. In the damper device 10 as shown in Fig. 2, the hub 14 is rotated about the axis C relative to the disc plates 12 in the direction toward the viewer of the figure, so that the control plates 34 and 38 held in abutting contact with the hub 14 are also rotated together with the hub 14 about the axis C relative to the disc plates 12 in the direction toward the viewer of the figure. This relative rotary motion between the hub 14 and the disc plates 12 and between the control plates 34, 38 and the disc plates 12 causes each of the flange portions 14b and the disc plate 12b to slide on the respective sliding surfaces (abutting surfaces) of the low-friction plate 42 interposed between the flange portions 14b and the disc plate 12b, whereby the low-friction plate 42 transmits the comparatively small hysteresis torque H1 to the hub 14. Further, the relative rotary motion between the disc plate 12a and the first control plate 34 causes the control plate 34 to slide on the sliding surface (abutting surface) of the low-friction plate 32 interposed between the disc plate 12a and the first control plate 34, whereby the low-friction plate 32 transmits the comparatively small hysteresis torque H1 to the disc plate 12a. On the other hand, the second control plate 38 and the hub 14 are rotated together, without a relative rotary motion therebetween, so that the high-friction plate 40 interposed therebetwen does not transmit the large hysteresis torque H2 to the disc plates 12. Thus, the small hysteresis torque H1 is generated by the low-friction plates 32 and 42 during the operation of the damper device 10 in the negative direction.

As described above, the control plates 34 and 38 are rotated relative to the hub 14 during the operation of the damper device 10 in the positive direction, while the control plates 34 and 38 are rotated together with the hub 14 during the operation of the damper device 10 in the negative direction. Accordingly, the friction plates to be effectively operated are switched depending upon whether the damper device 10 is operated in the positive direction or in the negative direction, so that the hysteresis torque to be generated changes depending upon whether the damper device 10 is operated in the positive or negative direction.

The hysteresis mechanism 30 according to the present embodiment uses the two control plates in the form of the first control plate 34 and the second control plate 38, which are axially movable relative to each other, and between which the conical spring 36 is interposed. The provision of the two control plates between which the conical spring 36 is interposed eliminates direct contacts of the conical spring 36 with the friction members, and a need to prevent rotary motions of the friction members relative to the disc plates to prevent wearing of the friction members due to their sliding contacts with the conical spring 36. Thus, unlike the hysteresis mechanism of the prior art structure, the present hysteresis mechanism 30 is not required to prevent the rotary motions of the friction members relative to the disc plates, so that the hysteresis mechanism 30 does not suffer from the irregular torque variations due to a gap required to prevent the relative rotary motions. As shown in Fig. 4 showing the operational characteristic of the damper device 10, no irregular torque variations encountered in the prior art structure take place in the present damper device 10, in the absence of the gap required to prevent the above-indicated relative rotary motions, as described above.

As described above, the present embodiment is configured such that when the damper device 10 is operated in the positive direction, the relative rotary motion between the control plates 34 and 38 and the hub 14 causes generation of the comparatively large hysteresis torque H2 by the high-friction plate 40 interposed between the second control plate 38 and the hub 14, while the relative rotary motion between the disc plate 12 and the hub 14 causes generation of the comparatively small hysteresis torque H1 by the low-friction plate 42 interposed between the disc plate 12 and the hub 14. On the other hand, when the damper device 10 is operated in the negative direction, a rotary motion of the disc plates 12 relative to the control plates 34 and 38 and the hub 14 while the control plates 34 and 38 and the hub 14 are rotated together causes generation of the comparatively small hysteresis torque H1 by the low-friction plate 42 interposed between the hub 14 and the disc plate 12b. Thus, the value of the hysteresis torque generated in the damper device 10 can be changed depending upon the direction of transmission of the input torque through the damper device 10 (depending upon whether the damper device 10 is operated in the positive direction or negative direction). It is noted that the conical spring 36 which is interposed between the first control plate 34 and the second control plate 38 is not held in contact with the friction members. Accordingly, unlike the prior art structure, the present structure is not required to dispose the friction members so as to extend through the disc plates, for thereby preventing the rotary motions of the friction members relative to the spring, so that a gap is not required to prevent the relative rotary motions, whereby the desired hysteresis torque can be generated.

In the present embodiment, the input torque is transmitted to the damper device 10 through the input rotary member in the form of the disc plates 12, when the damper device 10 is operated in the positive direction. In this case, the control plates 34 and 38 of the hysteresis mechanism 30 are rotated together with the disc plates 12. Further, the input torque is transmitted to the damper device 10 through the output rotary member in the form of the hub 14, when the damper device 10 is operated in the negative direction. In this case, the control plates 34 and 38 of the hysteresis mechanism 30 are rotated together with the hub 14.

The present embodiment is further configured such that the each of the abutting portions 34a and 38a of the control plates 34 and 38 which are gripped between the disc plates 12 and the torsion springs 16 is rotated together with the disc plates 12 when the damper device 10 is operated in the positive direction. Accordingly, the control plates 34 and 38 and the hub 14 are rotated relative to each other, so that the high-friction plate 40 interposed between the second control plate 38 and the hub 14 generates the comparatively large hysteresis torque H2, while the low-friction plate 42 interposed between the hub 14 and the disc plate 12b generates the comparatively small hysteresis torque H1. When the damper device 10 is operated in the negative direction, on the other hand, each of the control plates 34 and 38 the portion of which is gripped between the hub 14 and the torsion spring 16 is rotated together with the hub 14, so that the hub 14 and the disc plate 12b are rotated relative to each other, whereby the low-friction plate 42 interposed between the hub 14 and the disc plate 12b generates the comparatively small hysteresis torque H1. Thus, the value of the hysteresis torque generated in the damper device 10 can be changed depending upon the direction of transmission of the input torque through the damper device 10 (depending upon whether the damper device is operated in the positive direction or negative direction).

The present embodiment is also configured such that a relative rotary motion between the disc plate 12a and the first control plate 34 does not take place during the operation of the damper device 10 in the positive direction, so that the low-friction plate 32 does not generate a hysteresis torque. During the operation of the damper device 10 in the negative direction, however, a relative rotary motion takes place between the disc plate 12a and the first control plate 34, so that the low-friction plate 32 interposed therebetween generates the comparatively small hysteresis torque H1.

While the embodiment of this invention has been described in detail by reference to the drawings, it is to be understood that the invention may be otherwise embodied.

In the illustrated embodiment, the hysteresis torque H1 generated by the low-friction plate 32 and the hysteresis torque H1 generated by the low-friction plate 42 are equal to each other. However, these hysteresis torque values H1 and H2 need not be equal to each other and may be different from each other.

In the illustrated embodiment, each of the first and second control plates 34 and 38 has the two abutting portions 34a, 38a for the four torsion springs 16, such that the two abutting portions 34a, 38a are equiangularly spaced apart from each other in the circumferential direction of the control plates 34, 38. However, the number of the abutting portions 34a, 38a may be equal to the number of the torsion springs 16 (four torsion springs 16 in the illustrated embodiment).

Although the four torsion springs 16 are provided in the illustrated embodiment, the number of the torsion springs 16 may be suitably selected (for example, three torsion springs 16 may be provided). The number of the abutting portions 34a, 38a may be suitably selected depending upon the number of the torsion springs 16.

While the embodiment of the invention has been described for illustrative purpose only, it is to be understood that the invention may be embodied with various changes and improvements which may occur to those skilled in the art.

### NOMENCLATURE OF REFERENCE SIGNS

10: Damper device
12: A pair of disc plates
12a: One of the pair of disc plates
12b: The other of the pair of disc plates
14: Hub
16: Torsion springs (Elastic members)
30: Hysteresis mechanism
32: Low-friction plate (Third friction member)
34: First control plate
34a: Abutting portions (Portion of the first control plate)
36: Conical spring (Spring)
38: Second control plate
38a: Abutting portions (Portion of the second control plate)
40: High-friction plate (First friction member)
42: Low-friction plate (Second friction member)
H1, H2: Hysteresis torques

## Claims

1. A hysteresis mechanism (30) for a vehicular damper device (10) including a pair of disc plates (12) functioning as an input rotary member, a hub (14) functioning as an output rotary member, and elastic members (16) interposed between the disc plates (12) and the hub (14), said hysteresis mechanism being **characterized by** comprising:
first and second control plates (34, 38) configured to be disposed between one (12a) of said disc plates (12) and said hub (14) in an axial direction of the damper device (10);
a first friction member (40) configured to be disposed between said control plates (34, 38) and said hub (14) in the axial direction;
a second friction member (42) configured to be disposed between said hub (14) and the other (12b) of said disc plates (12) in the axial direction; and
a spring (36) interposed in a preloaded state between said first control plate (34) and said second control plate (38) in the axial direction,
and configured so that a hysteresis torque (H1) generated by a sliding action of the second friction member (42) during a relative rotary motion between said hub and said other (12b) of said disc plates (12) is smaller than a hysteresis torque (H2) generated by a sliding action of said first friction member (40) during a relative rotary motion between said control plates (34, 38) and said hub; and
each of said first control plate (34) and said second control plate (38) having a portion (34a, 38a) which is configured to be gripped between one end of said elastic members (16) and said hub (14), and between the one end of said elastic members (16) and said disc plates (12) in a circumferential direction of the damper device.

2. The hysteresis mechanism (30) according to claim 1, configured so that said first control plate (34) and said second control plate (38) are rotated relative to said hub (14) when the damper device (10) is operated in a positive direction, and are rotated together with said hub (14) when the damper device (10) is operated in a negative direction.

3. The hysteresis mechanism (30) according to claim 1 or 2, configured so that said first control plate (34) is axially interposed between said second control plate (38) and said one disc plate (12a) of said pair of disc plates (12), and a third friction member (32) is axially interposed between said one disc plate (12a) of said pair of disc plates (12) and said first control plate (34).

## Patentansprüche

1. Hysteresemechanismus (30) für eine Fahrzeugdämpfervorrichtung (10), umfassend ein Paar Scheibenplatten (12), die als ein Eingangsdrehelement dienen, eine Nabe (14), die als ein Ausgangsdrehelement dient, und elastische Elemente (16), die zwischen den Scheibenplatten (12) und der Nabe (14) angeordnet sind, wobei der Hysteresemechanismus **dadurch gekennzeichnet ist, dass** er aufweist:
erste und zweite Steuerplatten (34, 38), die konfiguriert sind, zwischen eine (12a) der Scheibenplatten (12) und der Nabe (14) in einer Achsenrichtung der Dämpfervorrichtung (10) angeordnet zu werden,
ein erstes Reibungselement (40), das konfiguriert ist, zwischen der Steuerplatte (34, 38) und der Nabe (14) in Achsenrichtung angeordnet zu werden,
ein zweites Reibungselement (42), das konfiguriert ist, zwischen der Nabe (14) und der anderen (12b) der Scheibenplatten (12) in Achsenrichtung angeordnet zu werden, und
eine Feder (36), die in einem vorgespannten Zustand zwischen der ersten Steuerplatte (34) und der zweiten Steuerplatte (38) in Achsenrichtung angeordnet ist,
und so konfiguriert ist, dass ein Hysteresedrehmoment (H1), das durch einen Rutschvorgang des zweiten Reibungselements (42) während einer Relativdrehbewegung zwischen der Nabe und der anderen (12b) der Scheibenplatten (12) erzeugt wird, kleiner als ein Hysteresedrehmoment (H2) ist, das durch einen Rutschvorgang des ersten Reibungselements (40) während einer Relativdrehbewegung zwischen der Steuerplatte (34, 38) und der Nabe erzeugt wird, und
wobei jeweils die erste Steuerplatte (34) und die zweite Steuerplatte (38) einen Abschnitt (34a, 38a) aufweisen, der konfiguriert ist, zwischen einem Ende der elastischen Elemente (16) und der Nabe (14) und zwischen einem Ende der elastischen Elemente (16) und den Scheibenplatten (12) in eine Umfangsrichtung der Dämpfervorrichtung ergriffen zu werden.

2. Hysteresemechanismus (30) nach Anspruch 1, der so konfiguriert ist, dass die erste Steuerplatte (34) und die zweite Steuerplatte (38) relativ zur Nabe (14) gedreht werden, wenn die Dämpfervorrichtung (10) in eine positive Richtung betrieben wird, und zusammen mit der Nabe (14) gedreht werden, wenn die Dämpfervorrichtung (10) in eine negative Richtung betrieben wird.

3. Hysteresemechanismus (30) nach Anspruch 1 oder 2, der so konfiguriert ist, dass die erste Steuerplatte (34) axial zwischen der zweiten Steuerplatte (38) und der einen Scheibenplatte (12a) des Paars der Scheibenplatten (12) angeordnet ist und ein drittes Reibungselement (32) axial zwischen der einen Scheibenplatte (12a) des Paars der Scheibenplatten (12) und der ersten Steuerplatte (34) angeordnet ist.

## Revendications

1. Mécanisme d'hystérésis (30) pour un dispositif d'amortisseur de véhicule (10) comprenant une paire de plaques de disque (12) qui fonctionnent comme un élément rotatif d'entrée, un moyeu (14) qui fonctionne comme un élément rotatif de sortie, et des éléments élastiques (16) interposés entre les plaques de disque (12) et le moyeu (14), ledit mécanisme d'hystérésis étant **caractérisé en ce qu'**il comporte :
des première et deuxième plaques de commande (34, 38) configurées pour être disposées entre une (12a) desdites plaques de disque (12) et ledit moyeu (14) dans une direction axiale du dispositif d'amortisseur (10) ;
un premier élément de friction (40) configuré pour être disposé entre lesdites plaques de commande (34, 38) et ledit moyeu (14) dans la direction axiale ;
un deuxième élément de friction (42) configuré pour être disposé entre ledit moyeu (14) et l'autre (12b) desdites plaques de disque (12) dans la direction axiale ; et
un ressort (36) interposé dans un état préchargé entre ladite première plaque de commande (34) et ladite deuxième plaque de commande (38) dans la direction axiale,
et configuré de telle sorte qu'un couple d'hystérésis (H1) généré par une action de glissement du deuxième élément de friction (42) pendant un mouvement rotatif relatif entre ledit moyeu et ladite autre (12b) desdites plaques de disque (12) est plus petit qu'un couple d'hystérésis (H2) généré par une action de glissement dudit premier élément de friction (40) pendant un mouvement rotatif relatif entre lesdites plaques de commande (34, 38) et ledit moyeu ; et
chacune de ladite première plaque de commande (34) et de ladite deuxième plaque de commande (38) ayant une partie (34a, 38a) qui est configurée pour être saisie entre une extrémité desdits éléments élastiques (16) et ledit moyeu (14), et entre l'une extrémité desdits éléments élastiques (16) et desdites plaques de disque (12) dans une direction circonférentielle du dispositif d'amortisseur.

2. Mécanisme d'hystérésis (30) selon la revendication 1, configuré de telle sorte que ladite première plaque de commande (34) et ladite deuxième plaque de commande (38) sont entraînées en rotation par rapport audit moyeu (14) quand le dispositif d'amortisseur (10) est actionné dans une direction positive, et sont entraînées en rotation avec ledit moyeu (14) quand le dispositif d'amortisseur (10) est actionné dans une direction négative.

3. Mécanisme d'hystérésis (30) selon la revendication 1 ou 2, configuré de telle sorte que ladite première plaque de commande (34) est axialement interposée entre ladite deuxième plaque de commande (38) et ladite première plaque de disque (12a) de ladite paire de plaques de disque (12), et un troisième élément de friction (32) est axialement interposé entre ladite première plaque de disque (12a) de ladite paire de plaques de disque (12) et ladite première plaque de commande (34).
